# EUROPEAN PATENT SPECIFICATION

(11) **EP 3 279 639 B1**
(45) Date of publication and mention of the grant of the patent: **15.04.2020**
(21) Application number: 16772105.9
(22) Date of filing: 07.03.2016
(51) Int. Cl.: G01N 21/01, B05D 1/18, G01N 21/25, G02B 21/26

(54) **METHOD OF FABRICATING SAMPLE STAGE FOR MICROSPECTROMETRIC ANALYSIS**
VERFAHREN ZUR HERSTELLUNG EINER PROBENSTUFE ZUR MIKROSPEKTROMETRISCHEN ANALYSE
PROCÉDÉ DE FABRICATION DE PLATINE D'ÉCHANTILLON POUR ANALYSE MICROSPECTROMÉTRIQUE

(30) Priority: 02.04.2015 JP 2015075594; 28.10.2015 JP 2015211480; 07.12.2015 JP 2015238183
(43) Date of publication of application: 07.02.2018
(73) Proprietor: Toray Research Center, Inc., Chuo-ku, Tokyo 103-0023 (JP)
(72) Inventor: MORIWAKI, Hirofumi, Otsu-shi Shiga 520-8567 (JP); OGAWA, Miyuki, Otsu-shi Shiga 520-8567 (JP)
(74) Representative: Kador & Partner PartG mbB
(86) International application number: PCT/JP2016/056993
(87) International publication number: WO 2016/158221

(56) References cited:
- WO-A1-2011/059430
- JP-A- H 063 267
- JP-A- H05 240 785
- JP-A- H06 109 626
- JP-A- 2004 205 305
- JP-A- 2006 291 266
- JP-A- 2008 203 020
- JP-A- 2010 175 338
- US-A1- 2014 309 329

## Description

### TECHNICAL FIELD

The present invention relates to a method for fabricating a sample stage for microspectrometric analysis.

### BACKGROUND ART

For example, microspectrometric techniques such as those by micro-FTIR (Fourier transform infrared microspectrophotometry) are effective for qualitative analysis of a trace amount of a minute organic specimen. When applying micro-FTIR to qualitative analysis, for example, a good FTIR spectrum cannot be obtained if the specimen to be examined does not have an appropriate thickness, and accordingly, the specimen preparation procedure is an important factor in obtaining a good FTIR spectrum. In the conventionally used procedure to perform micro-FTIR for a specimen in a dilute solution, for example, a pinhole to act as a condensation nucleus of a solution of a specimen in a solvent is produced in a thin fluorine resin film located on the infrared ray reflection member of a specimen stage, and the pinhole is examined by micro-FTIR to obtain information on components of the solute in a trace amount of the dilute solution, as disclosed in Patent documents 1 and 2.

Furthermore Japanese patent documents JP-H06109626 and JP-H05240785 disclose methods for coating FTIR sample stages with perfluoroalkyl resins such as Teflon.

### PRIOR ART DOCUMENTS

### PATENT DOCUMENTS

Patent document 1: Japanese Unexamined Patent Publication (Kokai) No. HEI 5-99813
Patent document 2: Japanese Unexamined Patent Publication (Kokai) No. HEI 5-240785

### SUMMARY OF THE INVENTION

### PROBLEM TO BE SOLVED BY THE INVENTION

With this method, however, the condensation nucleus has a large thickness and the resulting FTIR spectra are in a saturated state as a whole, leading to the problems of serious difficulty in spectrum analysis for qualitative examination of the components and easy destruction of the thin fluorine resin film attached on the member.

### MEANS OF SOLVING THE PROBLEM

The present invention adopts the following constitution to solve the problems described above:
(1) A method for fabricating a specimen stage for microspectrometric analysis using an optical material with a water repellent or oil repellent surface produced by immersing an optical material in a solution of a water repellent or oil repellent perfluoroalkyl-polyether-group-containing silane compound as represented by the undermentioned structural formula (I) dissolved in a solvent, heating the optical material after the immersion step, and washing the optical material to modify the surface thereof: 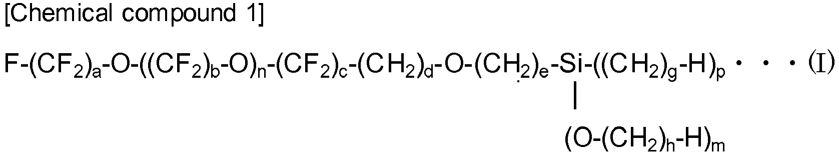 wherein a is an integer of 1 to 30; b is an integer of 1 to 10; c is an integer of 1 to 20, d is an integer of 1 to 10; e is an integer of 1 to 20; h is an integer of 0 to 10; g is an integer of 0 to 20; n is an integer of 1 to 320; and the sum of m and p is 3.
The method of the present invention is defined in claim 1.
(2) Amethod for fabricating a specimen stage for microspectrometric analysis as set forth in paragraph (1), wherein the optical material contains one or more substances selected from the group consisting of silicon, germanium, sapphire, calcium fluoride, barium fluoride, zinc selenide, and diamond.
(3) A method for fabricating a specimen stage for microspectrometric analysis as set forth in either paragraph (1) or (2), wherein the solvent contains one or more substances selected from the group consisting of alcohols, ketones, ethers, aldehydes, amines, fatty acids, esters, and nitriles, and the solvent is modified with fluorine.
(4) A method for fabricating a specimen stage for microspectrometric analysis as set forth in any one of paragraphs (1) to (3), wherein the specimen is crushed using a needle having an end diameter of 2 to 10 µm.
(5) A method for fabricating a specimen stage for microspectrometric analysis as set forth in any one of paragraphs (1) to (4), wherein the modified surface of the optical material has a region with an area of 0.001 to 10 mm² enclosed by straight or curved lines with a width of 1 to 1,000 µm to retain a solution therein.
(6) A method for fabricating a specimen stage for microspectrometric analysis as set forth in any one of paragraphs (1) to (5), wherein the lines around the region have a raised part with a height of 0.001 to 1 µm.
(7) A method for fabricating a specimen stage for microspectrometric analysis as set forth in any one of paragraphs (1) to (6), wherein the lines around the region have a depressed part with a depth of 0.001 to 1 µm.
(8) A method for fabricating a specimen stage for microspectrometric analysis as set forth in any one of paragraphs (1) to (7), wherein the modified surface of the optical material has a groove with a width of 0.01 to 1 mm and a depth of 0.001 to 0.1 mm or has a depression with a diameter of 0.01 to 1 mm and a depth of 0.001 to 0.1 mm.

### ADVANTAGEOUS EFFECTS OF THE INVENTION

The present invention enables, for example, simple and more accurate condensation operation of microspectrometric analysis using a plate produced by easily forming an intended water repellent or oil repellent perfluoroalkyl-ether-group containing thin film on the surface of an optical material.

### BRIEF DESCRIPTION OF THE DRAWINGS

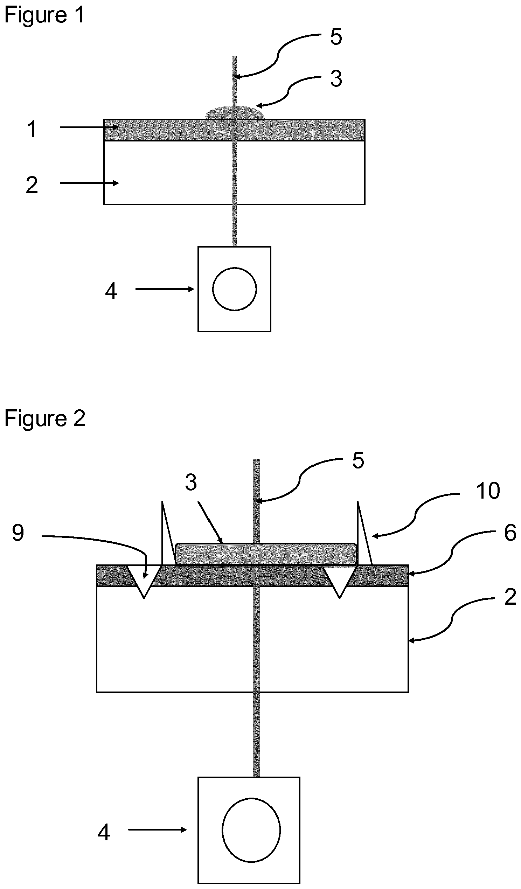

[Fig. 1] Fig. 1 is a schematic diagram illustrating a method for condensing a specimen for microspectrometric analysis according to the present invention.
[Fig. 2] Fig. 2 is a schematic diagram illustrating another method for condensing a specimen for microspectrometric analysis according to the present invention.
[Fig. 3] Fig. 3 is a schematic diagram illustrating still another method for condensing a specimen for microspectrometric analysis according to the present invention.
[Fig. 4] Fig. 4 shows a FTIR spectrum of a specimen on silicon after water repellent treatment.
[Fig. 5] Fig. 5 shows a FTIR spectrum of a specimen on a thin fluorine resin film attached to the infrared ray reflection member.
[Fig. 6] Fig. 6 shows a FTIR spectrum of a specimen crushed by a needle on silicon after water repellent treatment.
[Fig. 7] Fig. 7 shows a FTIR spectrum of a specimen on silicon after thickness control treatment by retaining a solution and water repellent treatment.
[Fig. 8] Fig. 8 shows a FTIR spectrum of a specimen on silicon after thickness control treatment using a groove and water repellent treatment.
[Fig. 9] Fig. 9 shows a FTIR spectrum of a specimen observed by an optimum method.

### DESCRIPTION OF PREFERRED EMBODIMENTS

The present invention will be described below.

The water repellent or oil repellent compound used in the method of the present invention is a perfluoroalkyl-polyether-group-containing silane compound as represented by the undermentioned structural formula (I). 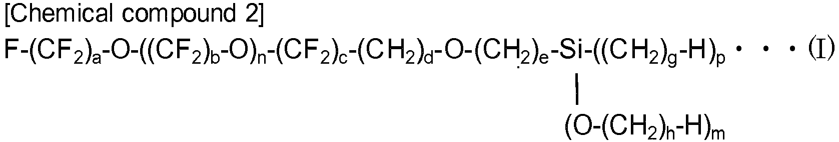 wherein a is an integer of 1 to 30; b is an integer of 1 to 10; c is an integer of 1 to 20, d is an integer of 1 to 10; e is an integer of 1 to 20; h is an integer of 0 to 10; g is an integer of 0 to 20; n is an integer of 1 to 320; and the sum of m and p is 3.

Preferred examples of the solvent for the present invention include alcohols, ketones, ethers, aldehydes, amines, fatty acids, esters, and nitriles that are modified with fluorine. In particular, fluorine modified ethers and fluorine modified alcohols are particularly preferable, and it is the most preferable for these ethers and alcohols to contain 2 to 20 carbon atoms.

The solution prepared by dissolving such a water repellent or oil repellent compound in a solvent preferably has a concentration of 0.001 to 10 mass%, more preferably 0.01 to 1 mass%.

Here, a coating technique may be adopted to carry out such modification for the present invention, and in that case, useful techniques include dip coating and spin coating. An optical material used for the present invention is preferably low in infrared ray absorbance, and useful examples include silicon, germanium, sapphire, calcium fluoride, barium fluoride, zinc selenide, and diamond. Of these, silicon is particularly preferable. For the present invention, the effect of improving both easiness and accuracy is realized if the surface of the optical material to be treated is mirror-finished by polishing in advance.

The optical material is immersed in the aforementioned liquid and after the immersion step, the optical material is dried by heating.

For the present invention, "heating of an optical material" means holding it at 80°C to 150°C for 30 minutes to 3 hours. It is more preferable to hold it at 90°C to 110°C for 30 minutes to 1 hour.

The technique adopted by the present invention to control the specimen thickness is to provide a groove or depression to ensure easy and accurate condensation operation. It is preferable to mirror-finish the surface by polishing in advance, and the surface on which the solution specimen is to be condensed preferably has a region with an area of 0.001 to 10 mm², more preferably 0.001 to 0.1 mm², enclosed by straight or curved lines with a width of 1 to 1,000 µm to retain the solution therein.

Furthermore, it is the most preferable that the lines have a raised part with a height of 0.001 to 1 µm or have a depressed part with a depth of 0.001 to 1 µm. Such a region can be defined using a material that is more rigid than the optical material.

In another preferred embodiment, the modified surface of the optical material has a groove with a width of 0.01 to 1 mm and a depth of 0.001 to 0.1 mm or has a depression with a diameter of 0.01 to 1 mm and a depth of 0.001 to 0.1 mm.

### EXAMPLES

The present invention will now be illustrated with reference to Examples, but it should be understood that the invention is not construed as being limited thereto.

First, the perfluoroalkyl-polyether-group-containing silane compound shown below was adopted as the water repellent or oil repellent compound.

[Chemical compound 3] F-(CF₂)₃-O-((CF₂)₃-O)₃₂-(CF₂)₂-CH₂-O-(CH₂)₃-Si-(O-CH₃)₃

Specifically, its 0.1 mass% solution in ethyl nonafluorobutyl ether, namely, DS-5210TH (manufactured by Harves), was used. Here, the average degree of polymerization of the chemical formula (n = 32 for the above structural formula (I)) is a calculation from ¹⁹F NMR.

A silicon plate with a surface mirror-finished by polishing in advance was immersed in the aforementioned solution.

After the immersion step, the silicon was dried by heating at 100°C for 1 hour. After the drying step, residual DS-5210TH was removed by washing with DS-TH (manufactured by Harves).

As a result of the above treatment, a thin film of about 10Å (0.001 µm) was formed on the silicon surface. It was actually confirmed from an ion image of a 5 mm × 5 mm square region taken by time-of-flight secondary ion mass spectrometry (TOF-SIMS) with an analyzing depth of 1 to several nanometers that molecular structures with water repellency, such as SiO₃H ion, C₃F₅O₂ ion, and C₃F₇O ion, were located uniformly.

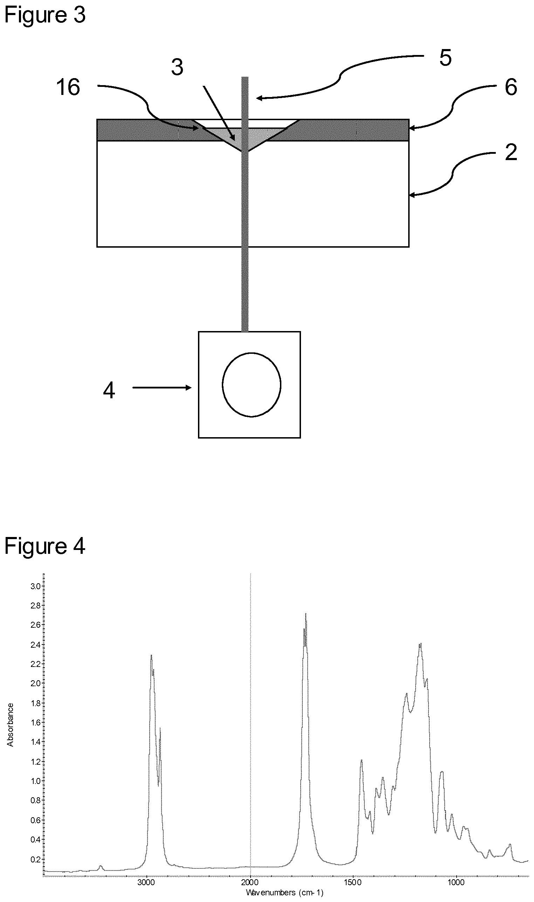

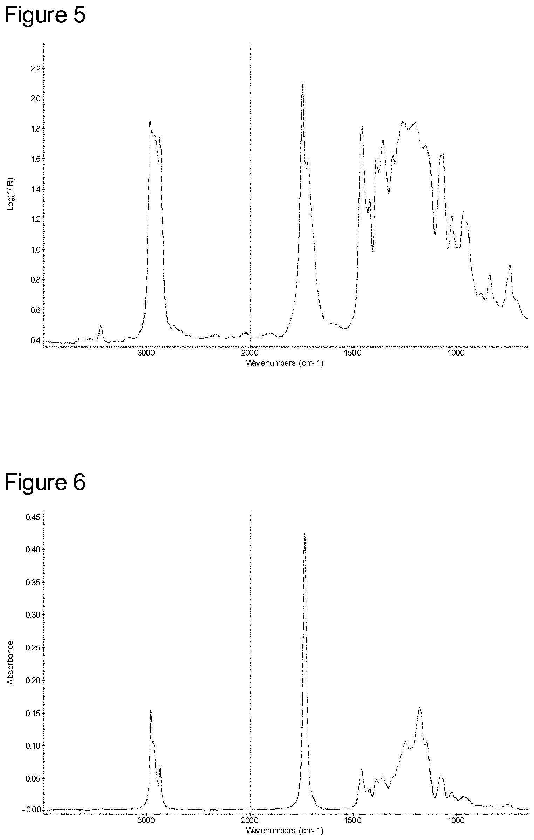

The curve in Fig. 4 shows a FTIR spectrum observed by transmission type infrared spectroscopy of a specimen prepared by condensing 100 ng (nanograms) of dibutyl adipate on a water repellent silicon surface, and the curve in Fig. 5 shows a FTIR spectrum observed by reflection type infrared spectroscopy of a specimen prepared by condensing 100 ng (nanograms) of dibutyl adipate on a thin fluorine resin film attached to an infrared ray reflection member.

The spectrum obtained, which is shown in Fig. 4, is better than that in Fig. 5 over the entire 700 to 4,000 cm⁻¹ region.

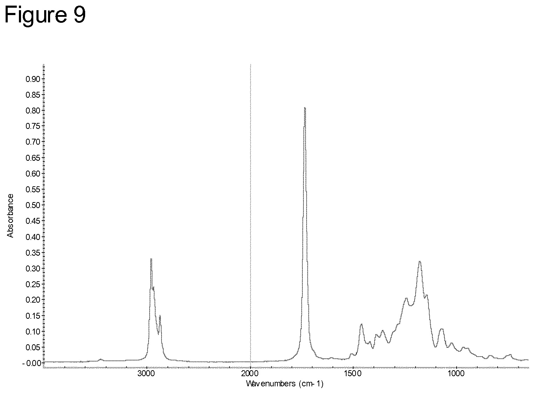

When a specimen condensed on a water repellent silicon surface and crushed by a needle with an end diameter of 2 to 10 µm was examined by transmission type infrared spectroscopy, the FTIR spectrum obtained, which is given in Fig. 6, was comparable to the FTIR spectrum obtained from observation by an optimum method (Fig. 9).

In another test, a rectangular region (0.028 mm²) with a long side of 280 µm and a short side of 100 µm defined by lines with a width of 10 µm was produced by a diamond pen (D-Point Pen, manufactured by Ogura Jewel Industry Co., Ltd.) on a modified surface. Examination of the lines performed by a surface roughness tester (Dektak, manufactured by Bruker) showed that the roughness was 200 nm in the depressed regions and 600 nm in the raised regions.

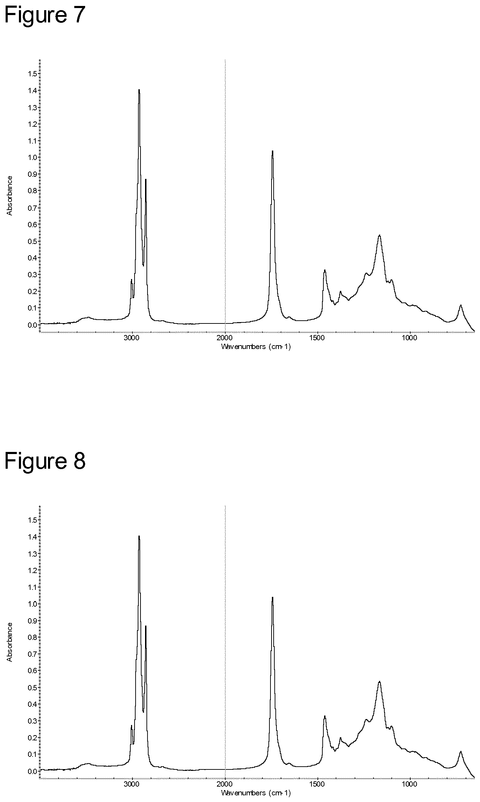

A solution of 1,000 ng of soybean oil in 5 µL of chloroform was dropped on the aforementioned silicon surface and, after volatilizing chloroform, condensed on the aforementioned rectangular region, and the soybean oil was analyzed by transmission type infrared spectroscopy. The FTIR spectrum obtained, which is shown in Fig. 7, is comparable to that in Fig. 9 over the entire 700 to 4,000 cm⁻¹ region.

A silicon plate having a surface mirror-finished by polishing in advance and having a groove with a width of 0.1 mm and a depth of 0.005 mm on the surface on which the solution specimen is to be condensed was immersed in the aforementioned solution and, after the immersion step, the silicon was dried by heating at 100°C for 1 hour. After the drying step, residual DS-5210TH was removed by washing with DS-TH (manufactured by Harves).

The curve in Fig. 8 shows a FTIR spectrum observed by transmission type infrared spectroscopy of a specimen prepared by condensing 1,000 ng of soybean oil on a water repellent silicon surface, suggesting that the spectrum obtained is comparable to that in Fig. 9 over the entire 700 to 4,000 cm⁻¹ region.

### Explanation of Numerals

- 1:: modified region
- 2:: optical material
- 3:: specimen
- 4:: detector
- 5:: infrared ray
- 6:: modified surface region
- 9:: depressed region
- 10:: raised region
- 16:: groove

## Claims

1. A method for fabricating a specimen stage for microspectrometric analysis using an optical material with a water repellent or oil repellent surface produced by immersing an optical material in a solution of a water repellent or oil repellent perfluoroalkyl-polyether-group-containing silane compound as represented by the undermentioned structural formula (I) dissolved in a solvent, heating the optical material after the immersion step, and washing the optical material to modify the surface thereof: 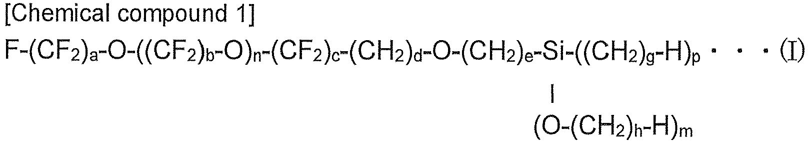 wherein a is an integer of 1 to 30; b is an integer of 1 to 10; c is an integer of 1 to 20, d is an integer of 1 to 10; e is an integer of 1 to 20; h is an integer of 0 to 10; g is an integer of 0 to 20; n is an integer of 1 to 320; and the sum of m and p is 3.

2. A method for fabricating a specimen stage for microspectrometric analysis as set forth in claim 1, wherein the optical material contains one or more substances selected from the group consisting of silicon, germanium, sapphire, calcium fluoride, barium fluoride, zinc selenide, and diamond.

3. A method for fabricating a specimen stage for microspectrometric analysis as set forth in either claim 1 or 2, wherein the solvent contains one or more substances selected from the group consisting of alcohols, ketones, ethers, aldehydes, amines, fatty acids, esters, and nitriles, and the solvent is modified with fluorine.

4. A method for fabricating a specimen stage for microspectrometric analysis as set forth in any one of claims 1 to 3, wherein the modified surface of the optical material has a region with an area of 0.001 to 10 mm² enclosed by straight or curved lines with a width of 1 to 1,000 µm to retain a solution therein.

5. A method for fabricating a specimen stage for microspectrometric analysis as set forth in claim 4, wherein the lines around the region have a raised part with a height of 0.001 to 1 µm.

6. A method for fabricating a specimen stage for microspectrometric analysis as set forth in any one of claims 4 to 5, wherein the lines around the region have a depressed part with a depth of 0.001 to 1 µm.

7. A method for fabricating a specimen stage for microspectrometric analysis as set forth in any one of claims 1 to 6, wherein the modified surface of the optical material has a groove with a width of 0.01 to 1 mm and a depth of 0.001 to 0.1 mm or has a depression with a diameter of 0.01 to 1 mm and a depth of 0.001 to 0.1 mm.

## Patentansprüche

1. Verfahren zum Herstellen eines Objekträgers zur mikrospektrometrischen Analyse unter Verwendung eines optischen Materials mit einer wasserabweisenden oder ölabweisenden Oberfläche, hergestellt durch Eintauchen eines optischen Materials in eine Lösung einer wasserabweisenden oder ölabweisenden Perfluoralkylpolyethergruppen-haltigen Silanverbindung, wie sie durch die unten genannte Strukturformel (I) dargestellt ist, die in einem Lösungsmittel gelöst ist, Erwärmen des optischen Materials nach dem Tauchschritt und Waschen des optischen Materials, um dessen Oberfläche zu modifizieren: 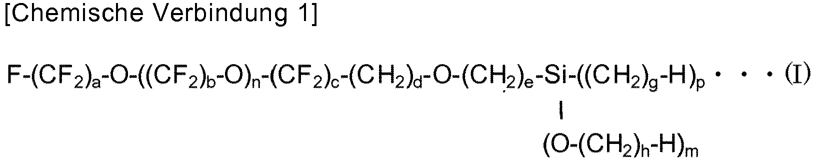 wobei a eine ganze Zahl von 1 bis 30 ist; b eine ganze Zahl von 1 bis 10 ist; c eine ganze Zahl von 1 bis 20 ist; d eine ganze Zahl von 1 bis 10 ist; e eine ganze Zahl von 1 bis 20 ist; h eine ganze Zahl von 0 bis 10 ist; g eine ganze Zahl von 0 bis 20 ist; n eine ganze Zahl von 1 bis 320 ist; und die Summe von m und p 3 ist.

2. Verfahren zum Herstellen eines Objekträgers zur mikrospektrometrischen Analyse nach Anspruch 1, wobei das optische Material eine oder mehrere Substanzen enthält, ausgewählt aus der Gruppe, bestehend aus Silizium, Germanium, Saphir, Calciumfluorid, Bariumfluorid, Zinkselenid und Diamant.

3. Verfahren zum Herstellen eines Objekträgers zur mikrospektrometrischen Analyse nach Anspruch 1 oder 2, wobei das Lösungsmittel eine oder mehrere Substanzen enthält, ausgewählt aus der Gruppe, bestehend aus Alkoholen, Ketonen, Ethern, Aldehyden, Aminen, Fettsäuren, Estern und Nitrilen, und das Lösungsmittel mit Fluor modifiziert ist.

4. Verfahren zum Herstellen eines Objekträgers zur mikrospektrometrischen Analyse nach einem der Ansprüche 1 bis 3, wobei die modifizierte Oberfläche des optischen Materials einen Region mit einem Bereich von 0,001 bis 10 mm² aufweist, der von geraden oder gekrümmten Linien mit einer Breite von 1 bis 1000 µm eingeschlossen ist, um eine Lösung darin zurückzuhalten.

5. Verfahren zum Herstellen eines Objekträgers zur mikrospektrometrischen Analyse nach Anspruch 4, wobei die Linien um die Region einen erhöhten Teil mit einer Höhe von 0,001 bis 1 µm aufweisen.

6. Verfahren zum Herstellen eines Objekträgers zur mikrospektrometrischen Analyse nach einem der Ansprüche 4-5, wobei die Linien um die Region herum einen abgesenkten Teil mit einer Tiefe von 0,001 bis 1 µm aufweisen.

7. Verfahren zum Herstellen eines Objekträgers zur mikrospektrometrischen Analyse nach einem der Ansprüche 1 bis 6, wobei die modifizierte Oberfläche des optischen Materials eine Rille mit einer Breite von 0,01 bis 1 mm und einer Tiefe von 0,001 bis 0,1 mm oder eine Absenkung mit einem Durchmesser von 0,01 bis 1 mm und einer Tiefe von 0,001 bis 0,1 mm aufweist.

## Revendications

1. Procédé de fabrication d'une platine à échantillon pour analyse microspectrométrique au moyen d'un matériau optique ayant une surface hydrofuge ou oléofuge produit par immersion d'un matériau optique dans une solution d'un composé silane contenant un groupe perfluoroalkyl-polyéther hydrofuge ou oléofuge tel que représenté par la formule structurale (I) mentionnée ci-dessous dissous dans un solvant, chauffage du matériau optique après l'étape d'immersion, et lavage du matériau optique pour modifier la surface de celui-ci : 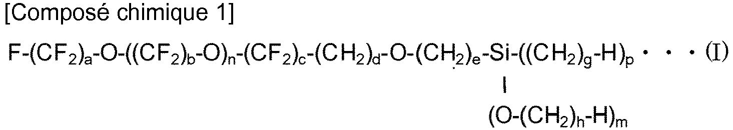 dans lequel a est un entier de 1 à 30 ; b est un entier de 1 à 10 ; c est un entier de 1 à 20, d est un entier de 1 à 10 ; e est un entier de 1 à 20 ; h est un entier de 0 à 10 ; g est un entier de 0 à 20 ; n est un entier de 1 à 320 ; et la somme de m et p est 3.

2. Procédé de fabrication d'une platine à échantillon pour analyse microspectrométrique selon la revendication 1, dans lequel le matériau optique contient une ou plusieurs substances choisies dans le groupe constitué du silicium, du germanium, du saphir, du fluorure de calcium, du fluorure de baryum, du séléniure de zinc et du diamant.

3. Procédé de fabrication d'une platine à échantillon pour analyse microspectrométrique selon la revendication 1 ou 2, dans lequel le solvant contient une ou plusieurs substances choisies dans le groupe constitué d'alcools, de cétones, d'éthers, d'aldéhydes, d'amines, d'acides gras, d'esters et de nitriles, et le solvant est modifié avec du fluor.

4. Procédé de fabrication d'une platine à échantillon pour analyse microspectrométrique selon l'une quelconque des revendications 1 à 3,
dans lequel la surface modifiée du matériau optique comporte une région ayant une aire de 0,001 à 10 mm² entourée par des lignes droites ou incurvées ayant une largeur de 1 à 1 000 µm pour retenir une solution dans celle-ci.

5. Procédé de fabrication d'une platine à échantillon pour analyse microspectrométrique selon la revendication 4,
dans lequel les lignes autour de la région comportent une partie surélevée ayant une hauteur de 0,001 à 1 µm.

6. Procédé de fabrication d'une platine à échantillon pour analyse microspectrométrique selon l'une quelconque des revendications 4 à 5,
dans lequel les lignes autour de la région comportent une partie évidée ayant une profondeur de 0,001 à 1 µm.

7. Procédé de fabrication d'une platine à échantillon pour analyse microspectrométrique selon l'une quelconque des revendications 1 à 6,
dans lequel la surface modifiée du matériau optique comporte une rainure ayant une largeur de 0,01 à 1 mm et une profondeur de 0,001 à 0,1 mm ou comporte un évidement ayant un diamètre de 0,01 à 1 mm et une profondeur de 0,001 à 0,1 mm.
